# EUROPEAN PATENT APPLICATION

(11) **EP 4 845 124 A1**
(43) Date of publication of application: **25.11.2026**
(21) Application number: 26153036.4
(22) Date of filing: 20.01.2026
(51) Int. Cl.: H04L 65/612, H04L 65/752, H04L 65/80

(54) **ADAPTIVE PROFILE LADDER FILTERING BASED ON THE NETWORK CONDITIONS**

(30) Priority: 20.05.2025 WO PCT/CN2025/095936; 06.06.2025 US 202519231017
(71) Applicant: Beijing YoJaJa Software Technology Development Co., Ltd., Beijing 100015 (CN)
(72) Inventor: SHANG, Renfei, Beijing (CN); LIU, Chen, Beijing (CN); DAI, Tongyu, Beijing (CN); ZHANG, Wenhao, Beijing (CN)
(74) Representative: Müller-Boré & Partner Patentanwälte PartG mbB

(57) **Abstract**

In some embodiments, a method determines network conditions for playback of content. The playback of content uses a first profile ladder to request segments of the content. The network conditions are categorized into a network category in a plurality of network categories. The method filters the first profile ladder to determine a second profile ladder. The filtering removes profiles from the first profile ladder between a minimum profile level and a maximum profile level. The second profile ladder is used during playback of the content to request segments of the content.

## Description

### CROSS REFERENCE TO RELATED APPLICATIONS

This application is a continuation application and, pursuant to 35 U.S.C. §120, is entitled to and claims the benefit of earlier filed application PCT App. No. PCT/CN2025/095936, filed May 20, 2025, entitled "ADAPTIVE PROFILE LADDER FILTERING BASED ON THE NETWORK CONDITIONS", the content of which is incorporated herein by reference in its entirety for all purposes.

### BACKGROUND

In content delivery or streaming, a profile ladder lists different profiles that are available for a client device to use when streaming segments of content (e.g., a video). Each profile may be associated with a different level, such as different levels of bitrate or quality. Accordingly, when network conditions are good (e.g., there is high available bandwidth), the client device can request a profile with a higher level (e.g., bitrate or quality). Conversely, when network conditions deteriorate (e.g., there is low available bandwidth), the client device can request a profile with a lower level (e.g., bitrate or quality). A content delivery system would like to provide client devices with a profile that has a higher level when higher bandwidth network conditions are being experienced, which improves the quality of the content being streamed. When lower bandwidth network conditions are being experienced, the content delivery system would like to provide client devices with a profile with a lower level such that the client devices can play the content without any playback issues, such as rebuffering or downloading failures.

An adaptive bitrate algorithm may analyze network conditions to select a profile to use. The adaptive bitrate algorithm dynamically selects the appropriate profile, such as of one specific bitrate, based on the client device's available network bandwidth and device capabilities, thereby optimizing playback performance. However, existing adaptive streaming solutions often encounter challenges in providing an optimal streaming experience, especially under poor and unstable network conditions. The adaptive bitrate algorithm tends to select the highest possible bitrate based on the estimated bandwidth or buffer length. The bitrate choices come from a static predefined set of profiles in the profile ladder after the content has been encoded. Generally, providing a rich available profile ladder set allows the adaptive bitrate algorithm to have a wide decision space and make a better choice of a profile. However, in real-world scenarios, as the number of available profiles increases, the overall QoE (Quality of Experience) decreases, such as the client device experiences more rebuffers. For example, if the profile ladder range is too wide or the number of profiles is too many, the rebuffer occurrence increases, which may be due to the adaptive bitrate algorithm being unable to fully anticipate future network conditions accurately. The seemingly optimal decision at the current moment may lead to globally suboptimal outcomes. When there are more profile options, the adaptive bitrate algorithm tends to select a higher bitrate, especially when the network is fluctuating. But when selecting a higher profile is followed by an unexpected rapid drop in bandwidth, it will result in more rebuffers because of a longer time in downloading segments, less accumulation of content in buffer time, and a delay of the update of estimated bandwidth.

### BRIEF DESCRIPTION OF THE DRAWINGS

The included drawings are for illustrative purposes and serve only to provide examples of possible structures and operations for the disclosed inventive systems, apparatus, methods, and computer program products. These drawings in no way limit any changes in form and detail that may be made by one skilled in the art without departing from the spirit and scope of the disclosed implementations.
FIG. 1 depicts a simplified system for performing profile filtering of a profile ladder according to some embodiments.
FIG. 2 depicts a flowchart of a method for selecting a network category according to some embodiments.
FIG. 3 depicts an example of a signal that is being analyzed from the network conditions according to some embodiments.
FIG. 4 depicts a flowchart for performing profile filtering according to some embodiments.
FIG. 5 depicts a flowchart of the training process according to some embodiments.
FIG. 6 depicts a flowchart for profile filtering using the model-based process according to some embodiments.
FIG. 7 depicts a video streaming system in communication with multiple client devices via one or more communication networks according to one embodiment.
FIG. 8 depicts a diagrammatic view of an apparatus for viewing video content and supplemental content.

### DETAILED DESCRIPTION

Described herein are techniques for a content delivery system. In the following description, for purposes of explanation, numerous examples and specific details are set forth to provide a thorough understanding of some embodiments. Some embodiments as defined by the claims may include some or all the features in these examples alone or in combination with other features described below, and may further include modifications and equivalents of the features and concepts described herein.

### System Overview

A system continuously monitors and calculates network-related metrics during content delivery, and applies change point detection to identify shifts in the network conditions. The change points may form scenarios of different network conditions. The system maps the latest detected scenario into one of the predefined categories based on the calculated metrics, enabling it to understand the current network state. By acquiring network information, such as statistical metrics of available bandwidth or bandwidth stability, the system determines insights into the network's behavior, allowing it to make optimal decisions in profile filtering.

After determining the network category, the system applies profile ladder filtering, which filters out profiles from the profile ladder to select a subset of profiles from the original profile ladder or the current profile ladder being used. The system dynamically adjusts which profiles are filtered based on the identified network category. The system may use different filtering methods, such as rules-based and model-based filtering methods. In some embodiments, the system uses the rule-based filtering method for network categories with lower average bandwidths, such as average bandwidths lower than 5 Mbps. For example, if the bandwidth is unstable and below 0.2 Mbps, the system may filter the profile ladder to only include the 200 kbps profile. In some embodiments, the model-based filtering method offers more flexibility and can be used for a broader range of network conditions, allowing the system to optimize its filtering based on specific objectives such as reducing costs or enhancing video quality. The system may dynamically switch between filtering methods, or use a pre-set filtering method.

The system overcomes the limitations of traditional adaptive bitrate algorithm optimization by simultaneously optimizing profile ladder filtering under different network scenarios, particularly in low-bandwidth, high-volatility conditions. This approach enables further enhancements in Quality of Experience (QoE) and objectives, beyond what is achievable with the adaptive bitrate algorithm alone. By addressing the challenges of unexpected network changes and inaccurate predictions of network variations, the system provides a more effective solution for optimizing video delivery by filtering profiles. The removal of the option to select more profiles may limit the selection of higher profiles when rebuffering may be more likely to occur. For example, if 1000 kbps, 1500 kbps, and 2000 kbps profiles are available in the original profile ladder, by removing some profiles, such as 1000 Mbps and 1500 Mbps, the adaptive bitrate algorithm may not switch to a higher profile (e.g., 2000 Mbps) until better conditions, such as higher available bandwidth or bandwidth stability, is experienced. In contrast, the adaptive bitrate algorithm may have switched to the 1000 kbps and 1500 kbps if these profiles were available, and that may have caused rebuffers if available bandwidth suddenly dropped.

Another technical advantage is the introduction of more comprehensive filtering operations for profile ladder management. Unlike previous solutions, the system considers not only the top profiles but also the number of profiles and profile division methods, recognizing their impact on quality of experience. By extending the filtering process to include the lower and middle tiers of the profile ladder, the system achieves a more refined and optimized enhancement of quality of experience. This approach enables more effective management of the profile ladder, leading to better-informed decisions about which profiles to use under different network conditions. Another improvement is the customizable objective function, which allows the optimization process to be tailored towards specific goals, such as reducing rebuffers, enhancing video quality, or balancing bandwidth costs. This flexibility ensures that the filtering process aligns with the desired priorities, resulting in more targeted performance improvements.

### System

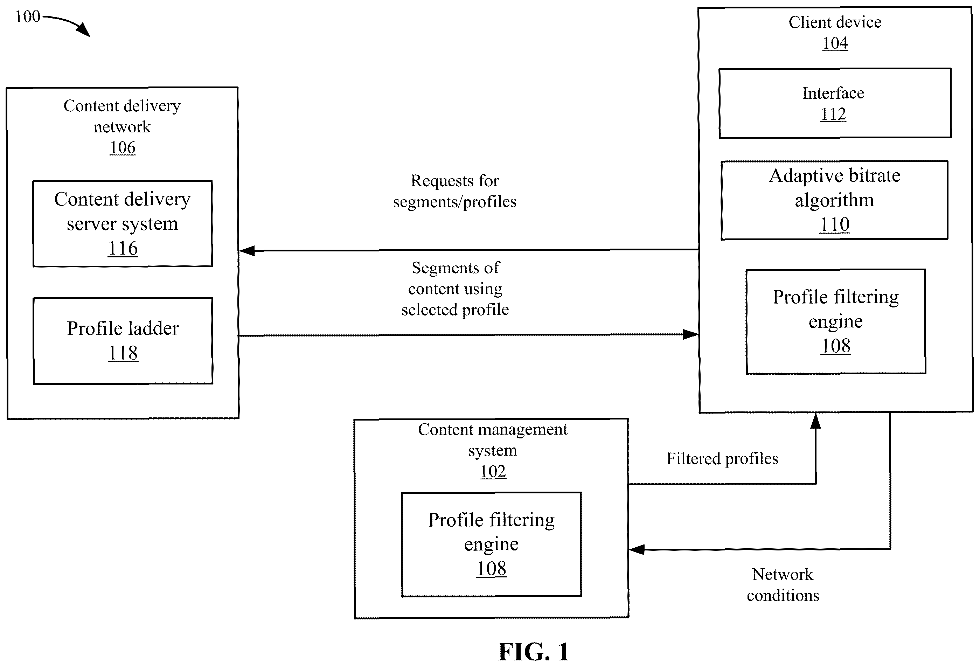

FIG. 1 depicts a simplified system 100 for performing profile filtering of a profile ladder according to some embodiments. System 100 includes a content management system 102, a client device 104, and a content delivery network 106. Content management system 102, content delivery network 106, and client device 104 may be implemented using one or more computing devices. Also, although single instances of content management system 102, content delivery network 106, and client device 104 are shown, it will be understood that system 100 may include more than one content management system 102, content delivery network 106, or client device 104. For instance, content management system 102 may communicate with multiple client devices 104, and content delivery network 106 may send content to client devices 104 via multiple servers, etc. Also, even though content management system 102, content delivery network 106, and client device 104 are shown as separate entities, the functions performed by them may be distributed between them or to other entities. Also, different systems to deliver content may be appreciated.

Content management system 102 may provide a content delivery service that allows client device 104 to request content (e.g., videos, audio, shorts, etc.). The service may be video on-demand or live video from live television. Content management system 102 may provide an application to client device 104 that can display an interface 112 at client device 104. A user account may log onto the application to access the content delivery service. Then, content management system 102 may receive a request for content from client device 104 and process the request to allow client device 104 to deliver the content.

Client device 104 may include a computing device that can playback content in interface 112, such as via a media player (not shown). Client device 104 may include a mobile phone, smartphone, set top box, television, living room device, tablet device, etc.

In the process to start playback of content, content management system 102 may receive the request for the content from client device 104. Content management system 102 may select a content delivery network 106 and provide the information to content delivery network 106 or client device 104 to allow the content to be delivered between content delivery network 106 and client device 104. Content management system 102 may also provide different information, such as a playback configuration. The playback configuration may include available profiles in a profile ladder. A manifest may include information on profiles that are available in the profile ladder, segment duration, and other characteristics of the video.

Content delivery network 106 includes servers that can deliver the content to client device 104. For example, a content delivery server system 116 may include one or more servers that can deliver the video to client device 104. In some embodiments, content delivery server system 116 delivers segments of video to client device 104. The segments may be a portion of the video, such as six seconds of the video. A video may be encoded in multiple profiles that correspond to different levels, which may be different levels of bitrates or quality. The multiple profiles may be referred to as a profile ladder 118. Each instance of content (e.g., video) may have an associated profile ladder 118 of profiles that have different levels of bitrates or quality. However, bitrate may be used as an example. The profiles may be classified at different levels and each level may be associated with a different characteristic. For example, each level may be associated with a different bitrate, such as 200 kilobytes per second (kbps), 300 kbps, 400 kbps, 500 kbps, 750 kbps, 1000 kbps, 1500 kbps, ... 12000 kbps. However, a level may be associated with another characteristic, such as a quality characteristic (e.g., resolution). For example, a level may be combination of bitrate and resolution. In some embodiments, the level may be determined based on how the video is encoded for the level, such as the video is encoded at the 400 kbps level for a profile associated with 400 kbps. The profile levels may be referred to as higher or lower, with profiles that have higher bitrates or quality being rated higher than profiles with lower bitrates or quality. Client device 104 may request a segment of video from one of the profile levels in profile ladder 118 based on current network conditions. The network conditions may be any conditions that are experienced based on the playback of a video, such as available bandwidth, buffer length, etc. For example, client device 104 may use an adaptive bitrate algorithm 110 to select the profile for the video based on the current available bandwidth, buffer length, and other network conditions.

Client device 104 may playback content during a playback session. Adaptive bitrate algorithm 110 may analyze current network conditions (e.g., available bandwidth) during the playback session of content to select a profile from a profile ladder 118 that is associated with the content. Adaptive bitrate algorithm 110 may select any available profiles from profile ladder 118. Based on the estimated bandwidth, adaptive bitrate algorithm 110 selects a profile from the profile ladder that matches the available bandwidth. For example, if the estimated bandwidth is 5 Mbps, the algorithm may select a profile with a bitrate of 4.5 Mbps.

A profile filtering engine 108 may filter profiles from profile ladder 118. In some embodiments, profile filtering engine 108 may be included in client device 104 or content management system 102. When included in client device 104, client device 104 analyzes the network conditions and filters profiles from profile ladder 118. When included in content management system 102, profile filtering engine 108 receives the network conditions from client device 104, analyzes the network conditions, and then performs profile filtering. Content management system 102 then sends the filtered profiles to client device 104. Content management system 102 may also use network conditions from other client devices to apply the profile filtering. For example, network conditions from a geographic area may be used to perform profile filtering.

The filtering process may remove profiles from being available to be selected by adaptive bitrate algorithm 110. In some embodiments, the filtering may be performed from an original profile ladder (e.g., the first profile ladder used). For example, each time filtering is performed, the subset is determined from the original profile ladder even if the prior scenario used a filtered subset. Also, the filtering may be performed from the current profile ladder (e.g., the profile ladder used to request the last segment), or from other profile ladders. An example of a profile ladder 118 is a full set of 21 profiles with different average bitrate (kbps) as follows: 200, 300, 400, 500, 750, 1000, 1500, 2000, 2500, 3000, 3500, 4000, 4500, 5000, 5500, 6000, 6500, 7000, 7500, 8000, 8500. The filtering of profiles may be performed to limit profiles that can be selected by adaptive bitrate algorithm 110. For example, a filtered profile ladder may be the profiles of: 200, 500, 1000, 2000, 3000, 5000. The limiting of selections may improve the content delivery process. In some embodiments, the filtering of profiles may be performed throughout the profile ladder, and not just removing the top profiles.

The filtering process may filter different profiles based on the network scenario that is determined. The following will describe the network scenario selection and then the profile filtering process.

### Network Category Selection

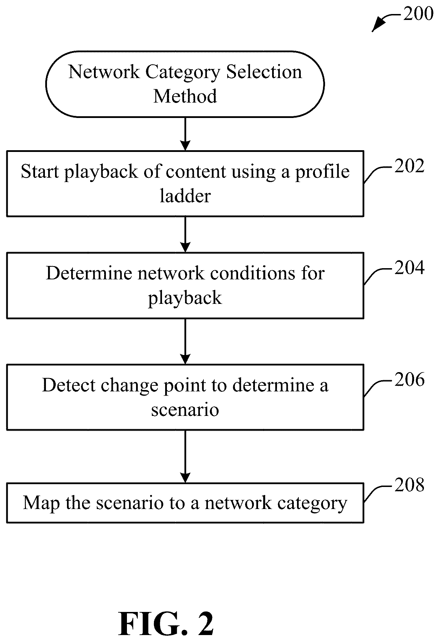

FIG. 2 depicts a flowchart 200 of a method for selecting a network category according to some embodiments. At 202, in a first phase, the process begins with the start of playback of content using a profile ladder 118, where the client device 104 initiates the streaming process and prepares to receive and playback the content. Profile ladder 118 may be the original profile ladder that is used before filtering. Profile filtering engine 108 continuously monitors and calculates the network-related metrics.

At 204, profile filtering engine 108 determines the network conditions for playback, which involves collecting statistical metrics such as previous observed bandwidth, mean of recent observed bandwidth, standard deviation of recent observed bandwidth, or coefficient of variation of recent observed bandwidth. Other metrics may also be used. Table 1 describes the network metrics that can be used to determine the network conditions.

**Table 1**

| **Information** | **Description** |
|---|---|
| PREVIOUS observed bandwidth | The observed download bandwidth of the previous segment |
| Mean of the RECENT observed bandwidth | The time-averaged download bandwidth of the previous <WINDOW_SIZE> seconds in the session, where window size is a set time |
| Standard Deviation of the RECENT observed bandwidth | The standard deviation of the download bandwidth of the previous <WINDOW_SIZE> seconds in the session |
| Coefficient of Variation of the RECENT observed bandwidth | The coefficient of variation of the download bandwidth of the previous <WINDOW_SIZE> seconds in the session. |
| | The coefficient of variation (CV) is a statistical measure that quantifies the relative variability relative to the mean. It is calculated by dividing the standard deviation by the mean. |

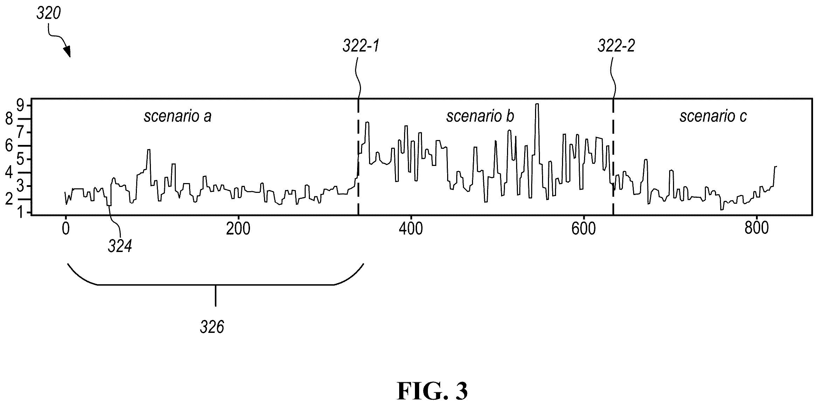

At 206, profile filtering engine 108 detects change points in the network conditions, which identifies significant shifts in the network conditions. Different change point detection processes may be used to detect changes in network conditions that meet a threshold. Change point detection is the task of finding changes in the underlying model of a signal or time series, which is described in more detail in FIG. 3. Based on the change points, profile filtering engine 108 determines a scenario, such as the scenario may represent network conditions between the last two change points.

At 208, profile filtering engine 108 maps the scenario to one of the predefined network categories based on the calculated metrics for the scenario. The network conditions of the scenario can be summarized and categorized in a category. For example, the network conditions of the scenario can be divided as follows based on the bandwidth level (e.g., measured by the mean of download bandwidth or another metric) and bandwidth stability (e.g., measured by the coefficient of variation of download bandwidth or another metric). The network categorization presented in Table 2 and Table 3 below is just one use case of how the division can be made, which uses the average bandwidth and bandwidth coefficient of variation for the categorization. The average bandwidth is the average bandwidth experienced during the scenario. The coefficient of variation measures the variation of bandwidth during the scenario. Other categorization standards may also be used, such as using different bandwidth-related metrics or applying different thresholds.

**Table 2**

| **Bandwidth Level** | **Rule** |
|---|---|
| < 0.2 Mbps | Average Bandwidth < 0.2 Mbps |
| 0.2 - 1 Mbps | 0.2 Mbps <= Average Bandwidth < 1 Mbps |
| 1 - 5 Mbps | 1 Mbps <= Average Bandwidth < 5 Mbps |
| 5 - 10 Mbps | 5 Mbps <= Average Bandwidth < 10 Mbps |
| 10 - 25 Mbps | 10 Mbps <= Average Bandwidth < 25 Mbps |
| 25 - 75 Mbps | 25 Mbps <= Average Bandwidth < 75 Mbps |
| > 75 Mbps | Average Bandwidth >= 75 Mbps |

**Table 3**

| **Bandwidth Stability** | **Rule** |
|---|---|
| Unstable | Bandwidth Coefficient of Variation > 0.5 |
| Stable | Bandwidth Coefficient of Variation < 0.15 |
| Fluctuating | Otherwise |

Table 2 describes a bandwidth level and a rule. The first level is defined as less than 0.2 Mega bits per second (Mbps), with a rule that the average bandwidth must be less than 0.2 Mbps. The second level ranges from 0.2 to 1 Mbps, with a rule that the average bandwidth must be greater than or equal to 0.2 Mbps and less than 1 Mbps. The third level spans from 1 to 5 Mbps, with a rule that the average bandwidth must be greater than or equal to 1 Mbps and less than 5 Mbps. The fourth level is between 5 and 10 Mbps, with a rule that the average bandwidth must be greater than or equal to 5 Mbps and less than 10 Mbps. The fifth level ranges from 10 to 25 Mbps, with a rule that the average bandwidth must be greater than or equal to 10 Mbps and less than 25 Mbps. The sixth level is between 25 and 75 Mbps, with a rule that the average bandwidth must be greater than or equal to 25 Mbps and less than 75 Mbps. The seventh level is greater than or equal to 75 Mbps, with a rule that the average bandwidth must be greater than or equal to 75 Mbps.

Table 3 describes a bandwidth stability and a rule. The bandwidth stability measures variation in the bandwidth over time in the scenario. The bandwidth stability is considered unstable when the bandwidth coefficient of variation is greater than 0.5, indicating a high degree of variability in the bandwidth. The bandwidth stability is considered stable when the bandwidth coefficient of variation is less than 0.15, indicating a low degree of variability in the bandwidth and a relatively consistent connection. The bandwidth stability is considered fluctuating when the bandwidth coefficient of variation falls outside of the unstable and stable ranges, meaning it is greater than or equal to 0.15 but less than or equal to 0.5, indicating some degree of variability in the bandwidth but not to the extent of being considered unstable.

The network conditions are divided into categories based on bandwidth level and bandwidth stability, with a total of 21 categories defined by crossing seven bandwidth levels and three bandwidth stability levels. Other categorizations may be appreciated. The network categories partition may be determined by analyzing the usage ratio and change ratio patterns on the profile ladder from historical data, where network conditions with similar profile consumption patterns are grouped into a single category. In some embodiments, when the bandwidth is low and fluctuating, adaptive bitrate algorithm 110 tends to switch between profiles more frequently, resulting in a relatively uniform distribution of profile usage. In contrast, as the bandwidth increases, profile usage becomes increasingly concentrated on the highest available profile, and playback of this concentrated profile also becomes more stable. This shift in behavior leads to a more nuanced categorization of network conditions at lower bandwidths, where categories are divided more finely to account for the varying usage patterns and switches between profiles. As a result, the network categories partition reflects a consideration of how adaptive bitrate algorithm 110 switches between different profiles under diverse network conditions, ultimately leading to optimal profile ladder filtering.

The categories may allow profile filtering engine 108 to classify the network conditions that are currently being experienced. The categories may be configured before playback of a video. For example, profile filtering engine 108 may receive network conditions for a number of sessions, such as a number of historical playback sessions. Also, the category tuning may be performed during the playback session using real time network conditions or historical network conditions. Profile filtering engine 108 may then analyze the network conditions to generate categories where each category may be associated with a different set of network conditions.

To select a category, profile filtering engine 108 first determines when a change point occurs. Profile filtering engine 108 receives network conditions, which may be real time playback sessions currently playing back a video, but may also be from historical playback sessions or simulated network conditions. Simulated network conditions may be conditions that are manually or automatically created, and historical network conditions are from prior playback sessions that have ended. The network conditions may be only from client device 104 that is playing back the content, or from other client devices. For example, network conditions from a geographic location may be used.

Profile filtering engine 108 may use the following process to determine change points, but other processes may be used. Profile filtering engine 108 receives network conditions. The network conditions may be represented by a signal or time series, which may be measurements from one or more playback sessions. The network conditions may be represented as signals (e.g., network traces) from playback sessions that can represent quality-of-service (QoS) performance of the session. The network conditions may measure different conditions that are experienced, such as bandwidth, rebuffering, etc. Change points may provide defined times that may be advantageous to select a new category and perform profile filtering. To provide change points to perform profile filtering, profile filtering engine 108 may divide the network conditions into different a window (or windows) of network conditions that can be used to determine when to perform profile filtering.

Profile filtering engine 108 analyzes the network conditions to detect change points. The analysis may measure changes in the signal and when the changes meet a threshold, profile filtering engine 108 may determine a change point occurs. The changes in the signal may represent a time in which profile ladder 118 may be adjusted.

FIG. 3 depicts an example 320 of a signal that is being analyzed from the network conditions according to some embodiments. The X axis may be a time during playback of a video and the Y axis may be the bandwidth (Mbps). A signal is shown at 324, which may be a representation of samples of the network conditions that are received, such as a mean of bandwidth samples. To analyze the signal, different methods may be used to determine when a change point occurs. For example, for a discrete signal that includes multiple samples *y*₀,*y*₁,···,*y*_{*T*-1}(*T samples),* profile filtering engine 108 may determine the sum of squared errors over all possible change point positions, such as at times, t₁, t₂, ..., t_{K}. In some embodiments, change points may be determined by selecting points that meet a threshold, such as change points that can minimize the sum of squared errors for the signal. The sum of squared errors may fit a line between sample points, and then a sliding window is used to compare the sample points in the window to find out the best fit through error reduction. The errors may be the sum of differences between the actual value and the predicted value. Minimizing the sum of squared errors finds points that minimizes the sum of squared errors for a portion of the signal. For a discrete signal *y*_{0,}*y*_{1,}..._{,}*y*_{*T*-1}(*T samples*) , profile filtering engine 108 may solve the following optimization problem over all possible change point positions *t*_{1,}*t*_{2,}..._{,}*tₖ:* ${\hat{t}}_{1} , {\hat{t}}_{2} , … , {\hat{t}}_{k} = arg {min}_{{t}_{1} … {t}_{K}} V \left({t}_{1}, {t}_{2},…, {t}_{K}\right)$ with $V \left({t}_{1}, {t}_{2},…, {t}_{K}\right) : = {\sum }_{k = 0}^{K} {\sum }_{t = {t}_{k}}^{{t}_{k + 1} - 1} {\left‖{y}_{t}-{\overline{y}}_{{t}_{k} . . {t}_{k + 1}}\right‖}^{2}$

For a signal, *y*_{0,}*y*_{1,}..._{,}*y*_{*T*-1}(*T samples),* each sample may be taken as a change point. Also, the change points can be defined as *t*₁, *t*₂, *... , t_{K}* by controlling the distance between change points. Note that: *t*₁ < *t*₂ < ··· *< t_{K}, t*₀ *= 0, t*_{*k*+1} *= T*. The summation ${\sum }_{t = {t}_{k}}^{{t}_{k + 1} - 1} {\left‖{y}_{t}-{\overline{y}}_{{t}_{k} . . {t}_{k + 1}}\right‖}^{2}$ represents the squared error of bandwidth samples between two adjacent change points, reflecting the fluctuation of bandwidth during this period. Also, the summation ${\sum }_{k = 0}^{K} {\sum }_{t = {t}_{k}}^{{t}_{k + 1} - 1} {\left‖{y}_{t}-{\overline{y}}_{{t}_{k} . . {t}_{k + 1}}\right‖}^{2}$ represents the sum of squared errors between a window of change points or all the change points. If change points are selected at times t₁ at 322-1 and t₂ at 322-2, the summations equal zero, that is, ${\sum }_{t = {t}_{0}}^{{t}_{1} - 1} {\left‖{y}_{t}-{\overline{y}}_{{t}_{k} . . {t}_{k + 1}}\right‖}^{2} = 0 , {\sum }_{t = {t}_{1}}^{{t}_{2} - 1} {\left‖{y}_{t}-{\overline{y}}_{{t}_{k} . . {t}_{k + 1}}\right‖}^{2} = 0 ⋯$, so ${\sum }_{k = 0}^{K} {\sum }_{t = {t}_{k}}^{{t}_{k + 1} - 1} {\left‖{y}_{t}-{\overline{y}}_{{t}_{k} . . {t}_{k + 1}}\right‖}^{2} = 0$. The sum of squared errors are zero for each portion of the signal between the change points because the fluctuation in bandwidth in the signal between change points is zero. If times t₁ and t₂ are not selected as change points, the sum of squared errors must be greater than 0 because there will be fluctuation in bandwidth in the portions of the signal between the change points.

In FIG. 3, profile filtering engine 108 determines change points at 322-1 and at 322-2. Note that profile filtering engine 108 may determine the change points as network conditions are received. The change points are determined based on a change in network conditions in signal 324 that meet a threshold. For example, by selecting a change point at 322-1, a first portion of the signal at 326 may have the sum of squared errors that meets the threshold (e.g., less than a value or zero). This is because including values of the signal after the change point at 322-1 may increase the error due to the values being further away from the values of the signal found in the first portion at 326. The other change point at 322-2 may be determined similarly.

Profile filtering engine 108 selects the change points as described above. Then, after determining change points at 322-1 or at 322-2, profile filtering engine 108 may determine playback characteristics for the scenarios formed by the change points. For example, using change points at 322-1 or at 322-2, profile filtering engine 108 may calculate the average bandwidth and coefficient of variation of bandwidth between change points at 322-1 and at 322-2. Using the metrics of bandwidth level and bandwidth stability, profile filtering engine 108 can map the current network conditions to a specific category. Other metrics may also be used, such as the number of rebuffers. One reason change points are used is that the network conditions of a playback session may be unstable and vary. By using change points, profile filtering engine 108 may determine distinct times when to perform profile filtering to improve the playback. This provides static conditions that can be met to determine when to perform the profile filtering. Using change points may also minimize the number of times profile filtering is performed. There may be a cost to perform profile filtering during a playback session, such as performing profile filtering may use computing resources. Also, performing profile filtering may cause adaptive bitrate algorithm 110 to operate differently, which may not be desirable if the network conditions have not changed significantly. It may be undesirable to continually perform profile filtering when network conditions have not changed significantly.

After categorizing the scenario, profile filtering engine 108 performs profile filtering.

### Profile Filtering

In a second phase, profile filtering engine 108 dynamically adjusts profiler ladder 118 to align with the identified network category from the first phase. There may be multiple options to use when applying the profile ladder filtering. One may be the rule-based filtering method and another one is the model-based filtering method. Profile filtering engine 108 may select one dynamically based on network conditions being experienced, or may use a pre-set one.

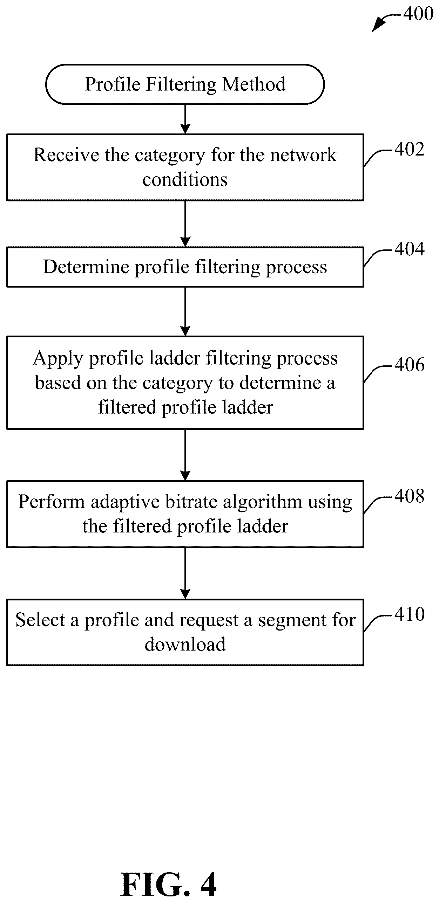

FIG. 4 depicts a flowchart 400 for performing profile filtering according to some embodiments. At 402, profile filtering engine 108 receives the category for the scenario. As described above, the network conditions are divided into categories based on bandwidth level and bandwidth stability, with a total of 21 categories defined by crossing seven bandwidth levels and three bandwidth stability levels.

At 404, profile filtering engine 108 determines a profile filtering process. In some embodiments, profile filtering engine 108 selects from a rule-based filtering method or a model-based filtering method. The rule-based filtering method uses predefined rules to determine the optimal profiles for each network category, considering factors such as average bandwidth and bandwidth stability. The model-based filtering method uses an objective function to optimize profile filtering parameters for categories. The profile filtering parameters may be used to determine the filtered profile ladder. The rules-based and model-based filtering methods are described in more detail below.

Profile filtering engine 108 may use different methods to select between the rule-based filtering method and the model-based filtering method. One option is to choose based on the network category, where for low-bandwidth categories (less than 5 Mbps), the rule-based filtering method may be more suitable, while for higher-bandwidth categories, the model-based filtering method may be used. Additionally, profile filtering engine 108 can select the filtering method based on bandwidth stability, where if the bandwidth is highly unstable, the model-based filtering method may be more effective in quickly adapting to changes, while if the bandwidth is relatively stable, the rules-based filtering method can optimize for better performance.

The characteristics of the video content being streamed are also an important consideration for profile filtering engine 108. For example, for high-resolution or high-bitrate content, the model-based filtering method may be more suitable to ensure optimal quality, while for lower-resolution or lower-bitrate content, the rule-based filtering method may be sufficient. Client-side parameters such as buffer size, playback position, and device capabilities are also important factors to consider. For instance, if the client has a small buffer size, the rule-based filtering method may be more suitable to ensure smooth playback, while if the client has a larger buffer size, the model-based filtering method can optimize for better quality.

At 406, profile filtering engine 108 applies the profile filtering method based on the category to filter the profile ladder, which involves selecting a subset of profiles that are suitable for the current network conditions. For example, when the bandwidth level is less than 0.2 Mbps and the bandwidth stability is unstable, fluctuating, or stable, the profile ladder after filtering is set to profile [200]. Note that when profile levels are discussed, they are referenced in kbps (e.g., 200 is 200 kbps). When the bandwidth level is between 0.2-1 Mbps, the profile ladder after filtering is set to profiles [200, 500, 1000] for unstable bandwidth stability, profiles [200, 300, 400, 500, 750, 1000] for fluctuating bandwidth stability, and profiles [200, 300, 400, 500, 750, 1000, 1500, 2000] for stable bandwidth stability.

At 408, adaptive bitrate algorithm 110 performs an adaptive bitrate algorithm using the filtered profile ladder, which dynamically adjusts the bitrate based on the current network conditions and the filtered profile ladder. Adaptive bitrate algorithm 110 uses various factors, including the client's buffer level, playback position, and available bandwidth, to select a profile from the filtered profile ladder. Profiles that were filtered out of the profile ladder cannot be selected.

At 410, profile filtering engine 108 selects a profile and requests a segment for download. Based on the filtered profile ladder and the current network conditions, profile filtering engine 108 selects the most suitable profile and requests the corresponding segment from content delivery network 106. The segment at the selected profile is then used to playback the content on interface 112 at client device 104.

### Rule-Based Filtering Method

The following will describe the rules-based method in more detail. In some embodiments, The rule-based filtering method is straightforward and could be used for the network categories when the average bandwidth is lower than 5 Mbps. This may be because the profile filtering for these network categories may simpler. Suppose the full set of profile ladder has 21 profiles with different average bitrate (kbps) as follows: 200, 300, 400, 500, 750, 1000, 1500, 2000, 2500, 3000, 3500, 4000, 4500, 5000, 5500, 6000, 6500, 7000, 7500, 8000, 8500. Table 4 depicts one of the rule-based filtering methods, but others may be appreciated:

**Table 4**

| Bandwidth level | Bandwidth stability | Profile ladder after filtering |
|---|---|---|
| < 0.2 Mbps | Unstable | 200 |
| < 0.2 Mbps | Fluctuating | 200 |
| < 0.2 Mbps | Stable | 200 |
| 0.2 - 1 Mbps | Unstable | 200, 500, 1000 |
| 0.2 - 1 Mbps | Fluctuating | 200, 300, 400, 500, 750, 1000 |
| 0.2 - 1 Mbps | Stable | 200, 300, 400, 500, 750, 1000, 1500, 2000 |
| 1 - 5 Mbps | Unstable | 200, 1000, 3000 |
| 1 - 5 Mbps | Fluctuating | 200, 500, 1000, 2000, 3000, 5000 |
| 1 - 5 Mbps | Stable | 200, 500, 1000, 2000, 3000, 4000, 5000, 5500 |
| Others | Others | Using the full profile ladder set |

Table 4 describes the relationship between bandwidth level, bandwidth stability, and the resulting profile ladder after filtering. The table is divided into four main sections based on bandwidth level: less than 0.2 Mbps, 0.2-1 Mbps, 1-5 Mbps, and Others, but other sections may be used.

For bandwidth levels less than 0.2 Mbps, the profile ladder after filtering is consistent across all three stability categories (unstable, fluctuating, and stable), with only the 200 kbps profile being used. In some embodiments, at very low bandwidths, a smaller number of profiles, such as a single, low-bitrate profile, is used to ensure smooth playback.

At bandwidth levels between 0.2-1 Mbps, the profile ladder after filtering varies depending on stability. For unstable conditions, the filtered profile ladder includes three profiles: 200, 500, and 1000 kbps. For fluctuating conditions, the filtered profile ladder includes more profiles, including seven profiles: 200, 300, 400, 500, 750, 1000 kbps. For stable conditions, the filtered profile ladder includes even more profiles, including eight profiles: 200, 300, 400, 500, 750, 1000, 1500, and 2000 kbps. The additional number of profiles as stability increases recognizes that rebuffering may be less when bandwidth is more stable and allows adaptive bitrate algorithm 110 to select among more profiles.

At bandwidth levels between 1-5 Mbps, the profile ladder after filtering again varies depending on stability. For unstable conditions, the filtered profile ladder includes three profiles: 200, 1000, and 3000 kbps. For fluctuating conditions, the filtered profile ladder includes six profiles: 200, 500, 1000, 2000, 3000, and 5000 kbps. For stable conditions, the filtered profile ladder includes the most profiles, including eight profiles: 200, 500, 1000, 2000, 3000, 4000, 5000, and 5500 kbps. An additional number of profiles as stability increases is used, but the higher bitrate levels are provided because the available bandwidth is higher.

Finally, for bandwidth levels outside of these ranges (i.e., "Others"), the rules use the full profile ladder set because the available bandwidth may be high enough to support using all the profiles.

Profile filtering may improve playback metrics. When the bandwidth level is < 0.2 Mbps and the bandwidth stability is unstable, fluctuating, or stable, using the profile ladder after filtering [e.g., 200 kbps] can help reduce the rebuffering time and save the bandwidth cost with similar video quality or having a small reduction in video quality, compared to using the full profile ladder or other filtered profile ladders.

When the bandwidth level is 0.2 -1 Mbps, using the profile ladder after filtering can help increase the video quality and save the bandwidth cost at the same time, with a reduction in the rebuffering time or maintaining a similar rebuffering time, compared to using the full profile ladder or other filtered profile ladders. Performance improvements may result from filtering out the top profiles but filtering may also need to reduce the number of lower profile options. One reason is that when the bandwidth is low and unstable, providing more profile options at lower bitrate levels can lead to easier bitrate switching up, resulting in increased download time for segments, a smaller buffer size, and ultimately causing more rebuffering when the network degrades to the point where it cannot support the downloading of the lowest bitrate profile. Another reason is that, providing more profiles leads to easier switch up to higher level profiles and when facing a sharp decline in the bandwidth, the download time of the current segment increases and the update of the estimated bandwidth slows down because the bandwidth is estimated after downloading of a segment. If the most suitable (such as the lowest bitrate) is not chosen in time, and a suboptimal bitrate is selected instead, this will further reduce the update frequency of the estimated bandwidth and increase the download time, which may cause more rebuffers. If the system only filter out the top profiles, and keeps all lower profiles, the system can only prevent the client from selecting high profiles, but cannot improve the phenomenon of the client frequently switching between lower profiles and the inappropriate and frequent switching up (such as from 200 kbps to 300 kbps) causing extra rebuffers). This may improve the quality of experience at profile levels in between the maximum bitrate and the minimum, such as by reducing rebuffers.

When the bandwidth level is 1-5 Mbps, using the profile ladder after filtering can help reduce the rebuffering time and save the bandwidth cost at the same time with a small reduction in video quality, or increase the video quality and save the bandwidth cost at the same time, compared to using the full profile ladder or other filtered profile ladders.

Profile filtering engine 108 determines the filtered profile ladder based on the rule that applies for the network category. This selects the optimal profiles from the full set of available profiles. The filtered profile ladder is then used to stream the content. For example, adaptive bitrate algorithm 110 may request an upcoming segment using the profiles that are available in the filtered profile ladder.

### Model-Based Filtering Method

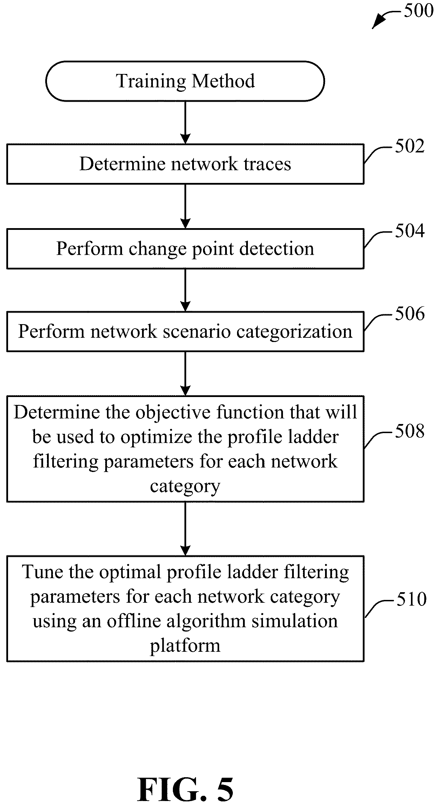

The model-based filtering method uses an offline training process to tune the optimal profile ladder filtering parameters for each network category based on the customized objective function. FIG. 5 depicts a flowchart of the training process according to some embodiments.

At 502, profile filtering engine 108 collects a number of network traces from historical data, which provides data on the fluctuating network conditions. The historical data may be from multiple client devices, one client device, etc.

At 504, profile filtering engine 108 analyzes the network traces for change points, which divides the network traces into several stationary scenarios. The change point detection may be performed as described above.

At 506, profile filtering engine 108 maps each scenario to one of the predefined network categories based on its bandwidth level and bandwidth stability. This categorization allows profile filtering engine 108 to determine the optimal profile ladder filtering parameters for each network category, using the specific characteristics of each category. The network categories are defined based on factors such as average bandwidth and bandwidth coefficient of variation.

At 508, profile filtering engine 108 determines the objective function that will be used to optimize the profile ladder filtering parameters for each network category. The objective function may be an objective that is optimized. The function may include metrics such as CIRR (Connection-Induced Rebuffering Rate), video quality, rebuffering time, and bandwidth cost, which may be weighted according to their importance. Other objective functions may be used with other metrics.

At 510, profile filtering engine 108 tunes the optimal profile ladder filtering parameters for each network category using an offline algorithm simulation platform. The simulation platform simulates the streaming process and predicts the streaming performance to compare and select the optimal profile ladder filtering parameters. As will be described below, the set of parameters that control the filtering process could be the number of profiles, the maximum bitrate in the profile ladder set, the minimum bitrate in the profile ladder set, and the profile ladder division method. The maximum bitrate and the minimum bitrate may be associated with profile levels, such as a 200 kbps profile level and a 1000 kbps profile level.

Profile filtering engine 108 determines the objective function, denoted as O(t), which serves as the optimization target for each segment t during playback. Profile filtering engine 108 formulates the objective function O(t) as a weighted sum of various metrics, where each metric is represented by a variable. For instance, the following objective function may be used, but other functions may be appreciated: $O \left(t\right) = α ∗ q \left({r}_{t}\right) - β ∗ {R}_{t} - γ ∗ \left|q\left({r}_{t}\right)-q\left({r}_{t - 1}\right)\right| - η ∗ C \left({r}_{t}\right) ,$ where *rₜ* represents the selected bitrate for segment t, *q*(*rₜ*) is the video quality perceived by the user, *Rₜ* is the rebuffering time from the session start to the segment t, |*q*(*rₜ*) - *q*(*r*_{*t*-1})| represents the video quality switch smoothness, *C*(*rₜ*) is the bandwidth cost, and α, β, γ, η are the weights of each item, and the weights can be customized depending on the importance of them.

Profile filtering engine 108 then proceeds to tune the optimal profile ladder filtering parameters for each network category to optimize the objective function. This process adjusts a set of parameters that control the filtering process, including the number of profiles, the maximum bitrate in the profile ladder set, the minimum bitrate in the profile ladder set, and the profile ladder division method. For example, if there are 21 profiles in the full set, the profile number can be adjusted from 1 to 21. The maximum bitrate in the profile ladder set can also be adjusted, allowing profile filtering engine 108 to choose any profiles whose average bitrate is smaller or equal to the specified value. The maximum bitrate may be the maximum bitrate for a profile in the filtered profile ladder or the previous profile ladder. The maximum bitrate in the profile ladder set is *maxₚ* . If there are 21 profiles, and their corresponding bitrate is *b*₁, *b*₂, ··· , *b*₂₁ from smallest to largest. If the maximum bitrate is set as *b*₂₁, it means that profile filtering engine 108 can choose any profiles whose average bitrate is smaller or equal to *b*₂₁.

Profile filtering engine 108 also considers the minimum bitrate in the profile ladder set. The minimum bitrate in the profile ladder set is *minₚ*. There are 21 profiles, and their corresponding bitrate is *b*₁,*b*₂, ... , *b*₂₁ from smallest to largest. If the minimum bitrate is set as *b*₁, it means that profile filtering engine 108 can choose any profiles whose average bitrate is larger or equal to *b*₁. The bitrate *minₚ* needs to be less than or equal to *maxₚ.* In some embodiments, keeping the lowest bitrate is important for reducing the rebuffer occurrences. Therefore, this parameter may always be the lowest bitrate. However, the minimum bitrate *minₚ* can still be set as one of the adjustable parameters.

Profile filtering engine 108 can select the profile ladder division method *dₚ*. The division method divides the bitrate for the profiles between the minimum bitrate and the maximum bitrate. Profile filtering engine 108 can choose between a bitrate-evenly divided or quality-evenly divided method for dividing the profile ladder, depending on whether the video quality of each profile is known. The division divides the profiles by bitrate or quality evenly, but non-even division may be used.

For a full profile ladder set, in some embodiments, profile filtering engine 108 maximizes the target objective function by traversing all possible profile ladder filtering parameters for each network category. In some embodiments, profile filtering engine 108 uses an offline algorithm simulation platform to simulate the streaming process and predict the streaming performance to compare and select the optimal profile ladder filtering parameters. By inputting the network trace data (which includes the change of bandwidth over time), and video trace data (which includes the average bandwidth, average video quality, etc. of each profile, and the size, video quality, etc. of each segment in every profile), the simulation platform simulates the entire streaming process, which includes the adaptive bitrate algorithm decision-making process, the downloading of video segments, and the playback of the segments. Therefore, during the playback, after identifying one network scenario and mapping it to its corresponding network category, profile filtering engine 108 can apply all possible parameter combinations to filter the profile ladder and simulate the streaming process under each profile ladder set, to obtain the resulting metrics, such as quality of service (QoS), video quality, bandwidth cost, and the result of the objective function within that network category. By comparing these results, profile filtering engine 108 can determine the specific parameter combination that yields the maximum objective function result for every specific network category. Then, during this offline process, profile filtering engine 108 determines the optimal profile ladder filtering parameters for each network category. Other methods to optimize the objective function may also be used, such as dynamic programming.

The profile ladder filtering parameters are saved for each network category. The parameters can be used to filter the profile ladder. For example, there is a profile ladder full set that includes the following bitrates, which means that the average bitrate of the profiles is as follows [200, 300, 400, 500, 750, 1000, 1500, 2000, 2500, 3000, 3500, 4000, 4500, 5000, 5500, 6000, 6500, 7000, 7500, 8000, 8500]. If the number of profiles is 8, the maximum bitrate is 8500, the minimum bitrate is 200, and the profile division method is bitrate even divided, based on these parameter values and the profile ladder full set, the profile ladder after filtering is: [200, 1000, 2000, 3000, 4500, 5500, 7000, 8500]. Here, profiles are filtered throughout the profile ladder and the top profiles are not just filtered. That is, there is a maximum bitrate and minimum bitrate in the full set or subset, and then additional profiles are filtered in between the maximum bitrate and the minimum bitrate. In another example, if the number of profiles is 4, the maximum bitrate is 1000, the minimum bitrate is 200, and the profile division method is bitrate even divided, based on these parameter values and the profile ladder full set, the profile ladder is profiles [200, 500, 750, 1000].

After the offline training is done, in the online process, profile filtering engine 108 will filter the profile ladder based on the optimal profile ladder filtering parameters that have been trained for the identified network category.

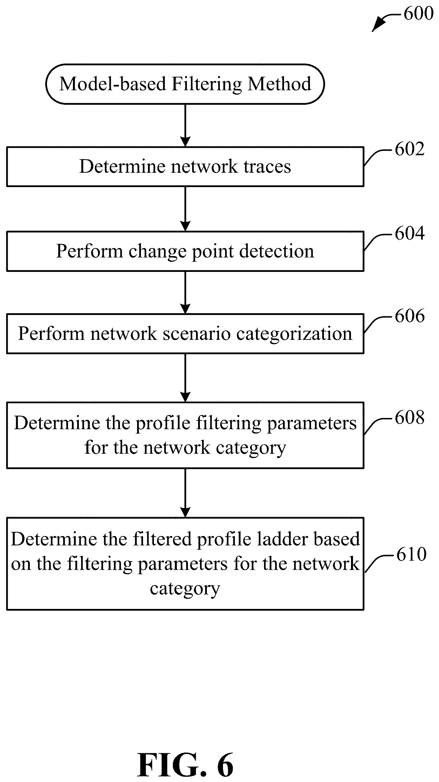

FIG. 6 depicts a flowchart 600 for profile filtering using the model-based process according to some embodiments. At 602, profile filtering engine 108 determines the network traces for playback. Profile filtering engine 108 may determine statistical metrics such as previous observed bandwidth, mean of recent observed bandwidth, standard deviation of recent observed bandwidth, and coefficient of variation of recent observed bandwidth.

At 604, profile filtering engine 108 detects change points in the network conditions, which identifies significant shifts in the network condition. As discussed above, by detecting these change points, profile filtering engine 108 can categorize the network traces into distinct scenarios. Each scenario is then categorized based on its specific characteristics, such as average bandwidth and bandwidth coefficient of variation.

At 606, profile filtering engine 108 maps the scenario to one of the predefined network categories based on its bandwidth level and bandwidth stability. The network categories are defined based on factors such as average bandwidth and bandwidth coefficient of variation. As discussed above, each network category may be associated with optimal profile ladder filtering parameters.

At 608, profile filtering engine 108 determines the profile filtering parameters for the network category by calculating the optimal number of profiles, maximum bitrate, minimum bitrate, or profile ladder division method. The filtering parameters were calculated in the offline training process, but may be calculated in real-time while playback is performed.

At 610, profile filtering engine 108 determines the filtered profile ladder based on the profile filtering parameters for the network category. This selects the optimal profiles from the full set of available profiles by applying the filtering parameters. The filtered profile ladder is then used to stream the content, providing an optimized viewing experience for client device 104. By continuously monitoring the network conditions and adjusting the filtering parameters accordingly, profile filtering engine 108 can ensure that the selected profiles remain optimal even with changing network conditions. Also, the optimal profile filtering parameters may be continuously updated and optimized as network conditions change using new network information.

### Conclusion

The profile filtering method optimizes content delivery performance by going beyond traditional adaptive bitrate algorithm optimization techniques. By simultaneously optimizing the profile ladder filtering process under challenging network scenarios, the process overcomes the limitations of relying solely on adaptive bitrate algorithms and provides a more comprehensive solution for enhancing Quality of Experience (QoE). The technical advantages include the ability to tailor the optimization process towards specific goals through a customizable objective function. This flexibility enables targeted performance improvements, such as reducing Connection-Induced Rebuffering Rate (CIRR), enhancing video quality, and balancing bandwidth costs.

Further, the process introduces more comprehensive filtering operations for the profile ladder, which can impact QoE beyond just the top profiles. By considering the number of profiles and profile division methods, the process achieves a more refined and optimized QoE enhancement. This helps in low-bandwidth, high-volatility conditions where traditional adaptive bitrate algorithms often struggle to provide optimal performance. The ability to adapt to these challenging network scenarios is different from systems that were limited to filtering out only the top profiles.

Using the profile filtering results in an improved content delivery process with fewer rebuffers and other improved metrics. Also, the viewing experience may be improved because of less rebuffering.

### System

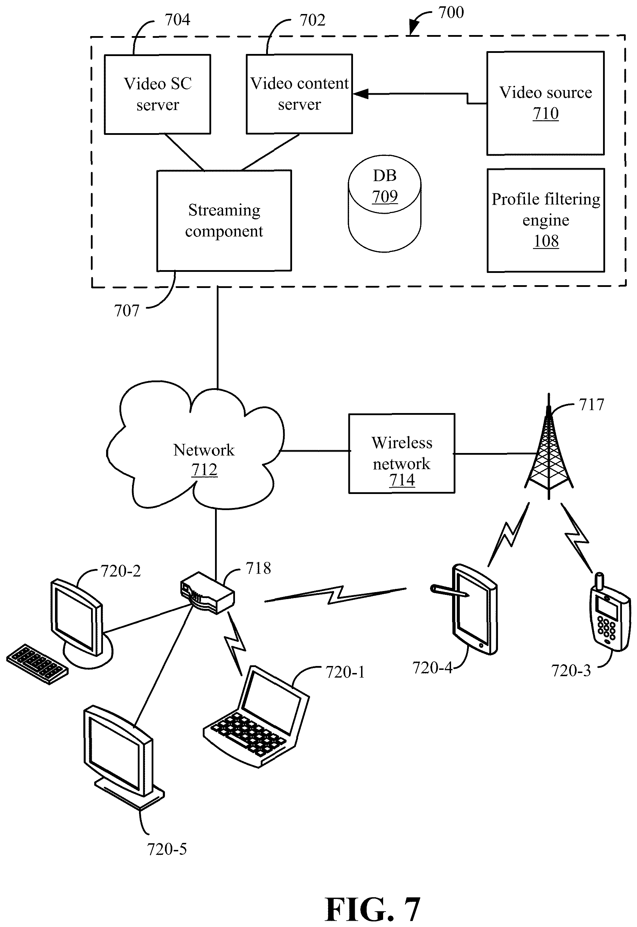

Features and aspects as disclosed herein may be implemented in conjunction with a video streaming system 700 in communication with multiple client devices via one or more communication networks as shown in FIG. 7. Aspects of the video streaming system 700 are described merely to provide an example of an application for enabling distribution and delivery of content prepared according to the present disclosure. It should be appreciated that the present technology is not limited to streaming video applications and may be adapted for other applications and delivery mechanisms.

In one embodiment, a media program provider may include a library of media programs. For example, the media programs may be aggregated and provided through a site (e.g., website), application, or browser. A user can access the media program provider's site or application and request media programs. The user may be limited to requesting only media programs offered by the media program provider.

In system 700, video data may be obtained from one or more sources, for example, from a video source 710, for use as input to a video content server 702. The input video data may comprise raw or edited frame-based video data in any suitable digital format, for example, Moving Pictures Experts Group (MPEG)-1, MPEG-2, MPEG-4, VC-1, H.264 / Advanced Video Coding (AVC), High Efficiency Video Coding (HEVC), or other format. In an alternative, a video may be provided in a non-digital format and converted to digital format using a scanner or transcoder. The input video data may comprise video clips or programs of various types, for example, television episodes, motion pictures, and other content produced as primary content of interest to consumers. The video data may also include audio or only audio may be used.

The video streaming system 700 may include one or more computer servers or modules 702, 704, and 707 distributed over one or more computers. Each server 702, 704, 707 may include, or may be operatively coupled to, one or more data stores 709, for example databases, indexes, files, or other data structures. A video content server 702 may access a data store (not shown) of various video segments. The video content server 702 may serve the video segments as directed by a user interface controller communicating with a client device. As used herein, a video segment refers to a definite portion of frame-based video data, such as may be used in a streaming video session to view a television episode, motion picture, recorded live performance, or other video content.

In some embodiments, a video supplemental content (SC) server 704 may access a data store of relatively short videos (e.g., 10 second, 30 second, or 60 second supplemental content) configured as advertising for a particular advertiser or message. The supplemental content may be provided for an entity in exchange for payment of some kind or may comprise a promotional message for the system 700, a public service message, or some other information. The video supplemental content server 704 may serve the supplemental content segments as directed by a user interface controller (not shown).

The video streaming system 700 also may include profile filtering engine 108.

The video streaming system 700 may further include an integration and streaming component 707 that integrates video content and supplemental content into a streaming video segment. For example, streaming component 707 may be a content server or streaming media server. A controller (not shown) may determine the selection or configuration of supplemental content in the streaming video based on any suitable algorithm or process. The video streaming system 700 may include other modules or units not depicted in FIG. 7, for example, administrative servers, commerce servers, network infrastructure, supplemental content selection engines, and so forth.

The video streaming system 700 may connect to a data communication network 712. A data communication network 712 may comprise a local area network (LAN), a wide area network (WAN), for example, the Internet, a telephone network, a wireless network 714 (e.g., a wireless cellular telecommunications network (WCS)), or some combination of these or similar networks.

One or more client devices 720 may be in communication with the video streaming system 700, via the data communication network 712, wireless network 714, or another network. Such client devices may include, for example, one or more laptop computers 720-1, desktop computers 720-2, "smart" mobile phones 720-3, tablet devices 720-4, network-enabled televisions 720-5, or combinations thereof, via a router 718 for a LAN, via a base station 717 for wireless network 714, or via some other connection. In operation, such client devices 720 may send and receive data or instructions to the system 700, in response to user input received from user input devices or other input. In response, the system 700 may serve video segments and metadata from the data store 709 responsive to selection of media programs to the client devices 720. Client devices 720 may output the video content from the streaming video segment in a media player using a display screen, projector, or other video output device, and receive user input for interacting with the video content.

Distribution of audio-video data may be implemented from streaming component 707 to remote client devices over computer networks, telecommunications networks, and combinations of such networks, using various methods, for example streaming. In streaming, a content server streams audio-video data continuously to a media player component operating at least partly on the client device, which may play the audio-video data concurrently with receiving the streaming data from the server. Although streaming is discussed, other methods of delivery may be used. The media player component may initiate play of the video data immediately after receiving an initial portion of the data from the content provider. Traditional streaming techniques use a single provider delivering a stream of data to a set of end users. High bandwidth and processing power may be required to deliver a single stream to a large audience, and the required bandwidth of the provider may increase as the number of end users increases.

Streaming media can be delivered on-demand or live. Streaming enables immediate playback at any point within the file. End-users may skip through the media file to start playback or change playback to any point in the media file. Hence, the end-user does not need to wait for the file to progressively download. Typically, streaming media is delivered from a few dedicated servers having high bandwidth capabilities via a specialized device that accepts requests for video files, and with information about the format, bandwidth, and structure of those files, delivers just the amount of data necessary to play the video, at the rate needed to play it. Streaming media servers may also account for the transmission bandwidth and capabilities of the media player on the destination client. Streaming component 707 may communicate with client device 720 using control messages and data messages to adjust to changing network conditions as the video is played. These control messages can include commands for enabling control functions such as fast forward, fast reverse, pausing, or seeking to a particular part of the file at the client.

Since streaming component 707 transmits video data only as needed and at the rate that is needed, precise control over the number of streams served can be maintained. The viewer will not be able to view high data rate videos over a lower data rate transmission medium. However, streaming media servers (1) provide users random access to the video file, (2) allow monitoring of who is viewing what video programs and how long they are watched (3) use transmission bandwidth more efficiently, since only the amount of data required to support the viewing experience is transmitted, and (4) the video file is not stored in the viewer's computer, but discarded by the media player, thus allowing more control over the content.

Streaming component 707 may use TCP-based protocols, such as HyperText Transfer Protocol (HTTP) and Real Time Messaging Protocol (RTMP). Streaming component 707 can also deliver live webcasts and can multicast, which allows more than one client to tune into a single stream, thus saving bandwidth. Streaming media players may not rely on buffering the whole video to provide random access to any point in the media program. Instead, this is accomplished using control messages transmitted from the media player to the streaming media server. Other protocols used for streaming are HTTP live streaming (HLS) or Dynamic Adaptive Streaming over HTTP (DASH). The HLS and DASH protocols deliver video over HTTP via a playlist of small segments that are made available in a variety of bitrates typically from one or more content delivery networks (CDNs). This allows a media player to switch both bitrates and content sources on a segment-by-segment basis. The switching helps compensate for network bandwidth variances and infrastructure failures that may occur during playback of the video.

The delivery of video content by streaming may be accomplished under a variety of models. In one model, the user pays for the viewing of video programs, for example, paying a fee for access to the library of media programs or a portion of restricted media programs, or using a pay-per-view service. In another model widely adopted by broadcast television shortly after its inception, sponsors pay for the presentation of the media program in exchange for the right to present supplemental content during or adjacent to the presentation of the program. In some models, supplemental content is inserted at predetermined times in a video program, which times may be referred to as "slots" or "breaks." With streaming video, the media player may be configured so that the client device cannot play the video without also playing predetermined supplemental content during the designated slots.

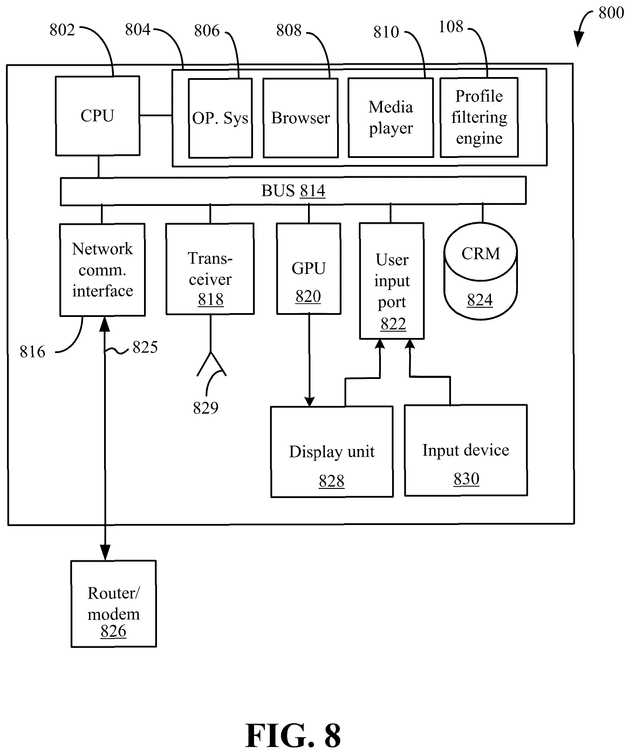

Referring to FIG. 8, a diagrammatic view of an apparatus 800 for viewing video content and supplemental content is illustrated. In selected embodiments, the apparatus 800 may include a processor (CPU) 802 operatively coupled to a processor memory 804, which holds binary-coded functional modules for execution by the processor 802. Such functional modules may include an operating system 806 for handling system functions such as input/output and memory access, a browser 808 to display web pages, and media player 810 for playing video. The modules may further include profile filtering engine 108. The memory 804 may hold additional modules not shown in FIG. 8, for example modules for performing other operations described elsewhere herein.

A bus 814 or other communication components may support communication of information within the apparatus 800. The processor 802 may be a specialized or dedicated microprocessor configured or operable to perform particular tasks in accordance with the features and aspects disclosed herein by executing machine-readable software code defining the particular tasks. Processor memory 804 (e.g., random access memory (RAM) or other dynamic storage device) may be connected to the bus 814 or directly to the processor 802, and store information and instructions to be executed by a processor 802. The memory 804 may also store temporary variables or other intermediate information during execution of such instructions.

A computer-readable medium in a storage device 824 may be connected to the bus 814 and store static information and instructions for the processor 802; for example, the storage device (CRM) 824 may store the modules for operating system 806, browser 808, and media player 810 when the apparatus 800 is powered off, from which the modules may be loaded into the processor memory 804 when the apparatus 800 is powered up. The storage device 824 may include a non-transitory computer-readable storage medium holding information, instructions, or some combination thereof, for example instructions that when executed by the processor 802, cause the apparatus 800 to be configured or operable to perform one or more operations of a method as described herein.

A network communication (comm.) interface 816 may also be connected to the bus 814. The network communication interface 816 may provide or support two-way data communication between the apparatus 800 and one or more external devices, e.g., the streaming system 700, optionally via a router/modem 826 and a wired or wireless connection 825. In the alternative, or in addition, the apparatus 800 may include a transceiver 818 connected to an antenna 829, through which the apparatus 800 may communicate wirelessly with a base station for a wireless communication system or with the router/modem 826. In the alternative, the apparatus 800 may communicate with a video streaming system 700 via a local area network, virtual private network, or other network. In another alternative, the apparatus 800 may be incorporated as a module or component of the system 700 and communicate with other components via the bus 814 or by some other modality.

The apparatus 800 may be connected (e.g., via the bus 814 and graphics processing unit 820) to a display unit 828. A display 828 may include any suitable configuration for displaying information to an operator of the apparatus 800. For example, a display 828 may include or utilize a liquid crystal display (LCD), touchscreen LCD (e.g., capacitive display), light emitting diode (LED) display, projector, or other display device to present information to a user of the apparatus 800 in a visual display.

One or more input devices 830 (e.g., an alphanumeric keyboard, microphone, keypad, remote controller, game controller, camera, or camera array) may be connected to the bus 814 via a user input port 822 to communicate information and commands to the apparatus 800. In selected embodiments, an input device 830 may provide or support control over the positioning of a cursor. Such a cursor control device, also called a pointing device, may be configured as a mouse, a trackball, a track pad, touch screen, cursor direction keys or other device for receiving or tracking physical movement and translating the movement into electrical signals indicating cursor movement. The cursor control device may be incorporated into the display unit 828, for example using a touch sensitive screen. A cursor control device may communicate direction information and command selections to the processor 802 and control cursor movement on the display 828. A cursor control device may have two or more degrees of freedom, for example allowing the device to specify cursor positions in a plane or three-dimensional space.

Some embodiments may be implemented in a non-transitory computer-readable storage medium for use by or in connection with the instruction execution system, apparatus, system, or machine. The computer-readable storage medium contains instructions for controlling a computer system to perform a method described by some embodiments. The computer system may include one or more computing devices. The instructions, when executed by one or more computer processors, may be configured or operable to perform that which is described in some embodiments.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

## Claims

1. A method comprising:
determining network conditions for playback of content, wherein the playback of content uses a first profile ladder to request segments of the content;
categorizing the network conditions into a network category in a plurality of network categories;
filtering the first profile ladder to determine a second profile ladder, wherein the filtering removes profiles from the first profile ladder between a minimum profile level and a maximum profile level; and
using the second profile ladder during playback of the content to request segments of the content.

2. The method of claim 1, wherein determining the network conditions comprises:
determining a previous observed bandwidth of a segment, a mean of a window of observed bandwidth, a standard deviation of the window of observed bandwidth, or a variation in the window of observed bandwidth; and
using the previous observed bandwidth of the segment, the mean of a window of observed bandwidth, the standard deviation of the window of observed bandwidth, or the variation in the window of observed bandwidth to determine a change point in network conditions.

3. The method of claim 2, wherein categorizing the network conditions into the network category comprises:
determining a scenario of a period of time during playback based on the change point; and
categorizing characteristics of the period of time into the network category.

4. The method of any one of claims 1 to 3, wherein categorizing the network conditions into the network category comprises:
determining a bandwidth level based on bandwidth in the network conditions;
determining a bandwidth stability based on a variation in the network conditions; and
using the bandwidth level and the bandwidth stability to determine the network category.

5. The method of claim 4, wherein different combinations of values for the bandwidth level and the bandwidth stability form network categories in the plurality of network categories,
wherein, optionally:
different profiles are determined for the second profile ladder based on different combinations of values for the bandwidth level and the bandwidth stability.

6. The method of claim 4 or 5, wherein:
for a value of the bandwidth level, different profiles are determined for the second profile ladder based on different values for the bandwidth stability.

7. The method of any one of claims 1 to 6, further comprising selecting a filtering process from a plurality of filtering processes based on the network conditions, wherein filtering processes in the plurality of filtering processes filter the first profile ladder differently,
wherein, optionally, the plurality of filtering processes include a rules-based filtering process that uses rules to determine the second profile ladder and a model-based filtering process that models an objective function to determine the second profile ladder.

8. The method of any one of claims 1 to 7, wherein filtering the first profile ladder comprises:
determining different combinations of profiles for different network categories of bandwidth level and bandwidth stability; and
selecting one of the combinations of profiles based on the network category as the second profile ladder.

9. The method of any one of claims 1 to 8, wherein filtering the first profile ladder comprises:
determining different values for profile filtering parameters for different network categories using a model training process;
determining the values of the profile filtering parameters for the network category; and
determining the second profile ladder based on the values of the profile filtering parameters for the network category.

10. The method of claim 9, wherein determining the second profile ladder comprises:
applying the profile filtering parameters to the first profile ladder to filter the first profile ladder into the second profile ladder; and/or
wherein the values of the profile filtering parameters comprise a number of profiles, a maximum bitrate for a profile, a minimum bitrate for a profile, or a profile division method.

11. The method of claim 9 or 10, wherein the model training process comprises:
determining historical network conditions;
determining change points to determine scenarios in the historical network conditions;
categorizing the scenarios into network categories in the plurality of network categories; and
optimizing an objective function using the network conditions for the scenarios to determine profile filtering parameters for network categories in the plurality of network categories,
wherein, optionally, optimizing the objective function comprises:
analyzing different combinations of values for the profile filtering parameters to determine optimal profile filtering parameters for the network categories in the plurality of network categories.

12. The method of any one of claims 1 to 11, wherein the first profile ladder is filtered by removing profiles that are in between the minimum profile level and the maximum profile level; and/or
wherein the first profile ladder is filtered by removing profiles using a division method between the minimum profile level and the maximum profile level.

13. A non-transitory computer-readable storage medium having stored thereon computer executable instructions, which when executed by a computing device, cause the computing device to be operable for:
determining network conditions for playback of content, wherein the playback of content uses a first profile ladder to request segments of the content;
categorizing the network conditions into a network category in a plurality of network categories;
filtering the first profile ladder to determine a second profile ladder, wherein the filtering removes profiles from the first profile ladder between a minimum profile level and a maximum profile level; and
using the second profile ladder during playback of the content to request segments of the content.

14. The non-transitory computer-readable storage medium of claim 13, further operable for:
selecting a filtering process from a plurality of filtering processes based on the network conditions, wherein filtering processes in the plurality of filtering processes filter the first profile ladder differently.

15. An apparatus comprising:
one or more computer processors; and
a computer-readable storage medium comprising instructions for controlling the one or more computer processors to be operable for:
determining network conditions for playback of content, wherein the playback of content uses a first profile ladder to request segments of the content;
categorizing the network conditions into a network category in a plurality of network categories;
filtering the first profile ladder to determine a second profile ladder, wherein the filtering removes profiles from the first profile ladder between a minimum profile level and a maximum profile level; and
using the second profile ladder during playback of the content to request segments of the content.
